# EUROPÄISCHE PATENTSCHRIFT

(11) **EP 3 367 846 B1**
(45) Veröffentlichungstag und Bekanntmachung des Hinweises auf die Patenterteilung: **07.08.2019**
(21) Anmeldenummer: 16787458.5
(22) Anmeldetag: 27.10.2016
(51) Int. Cl.: A47C 13/00, F16B 12/10, F16B 12/40, F16B 7/04, F16B 12/00

(54) **BETT UND POLSTERMÖBEL**
BED AND UPHOLSTERED FURNITURE
LIT ET MEUBLE CAPITONNÉ

(30) Priorität: 28.10.2015 DE 102015118402
(43) Veröffentlichungstag der Anmeldung: 05.09.2018
(73) Patentinhaber: Hettich Franke GmbH & Co. KG, 72336 Balingen-Weilstetten (DE)
(72) Erfinder: STAUSS, Gerd, 72474 Winterlingen (DE); RIEDMÜLLER, Holger, 72336 Balingen (DE)
(74) Vertreter: Dantz, Jan Henning
(86) Internationale Anmeldenummer: PCT/EP2016/075873
(87) Internationale Veröffentlichungsnummer: WO 2017/072203

(56) Entgegenhaltungen:
- FR-A- 723 491
- JP-A- 2000 083 743
- JP-U- S58 161 568
- JP-U- S58 175 754

## Beschreibung

Die vorliegende Erfindung betrifft ein Bett oder ein Polstermöbel, nach den Oberbriffen der Ansprüche 1 und 2, die einen Verbindungsbeschlag umfasen.

Die DE 74 35 987 U offenbart einen Rahmen für ein Bettgestell, bei dem zwei Holme des Rahmens über Verbindungsmittel aneinander gehalten sind. Das Verbindungsmittel ist in die Holme eingesteckt und dort über eine Arretiereinrichtung in Form einer Schraube fixiert. Dadurch kann eine stabile Verbindung zwischen den beiden Holmen bereitgestellt werden. Wenn die Holme allerdings im Bereich der Verbindungsmittel frei hängend angeordnet sind, kann dies zu einer Absenkung aufgrund der Toleranzen zwischen den Holmen und dem Verbindungsmittel und etwaigen Materialverformungen kommen. Eine nachträgliche Ausrichtung der Holme ist mit diesem Beschlag nicht möglich.

Die FR 723 491 offenbart eine Vergbindung von Rohren für den Gerüstbau. In zwei benachbarten Rohren ist ein mehrteilige Stopfen angeordnet, der durch eine Schraube klemmend festlegbar ist.

Es ist daher Aufgabe der vorliegenden Erfindung, ein Bett oder ein Polstermöbel mit einem Verbindungsbeschlag für Möbelteile zu schaffen, der für eine sichere Festlegung der Möbelteile sorgt und eine Ausrichtung oder Justierung der Möbelteile relativ zueinander ermöglicht.

Diese Aufgabe wird mit einem Bett mit den Merkmalen des Anspruches 1 und einem Polstermöbel mit den Merkmalen des Anspruches 2 gelöst.

Bei dem erfindungsgemäßen Bett oder Polstermöbel umfasst einen Verbindungsbeschlag, bei dem mindestens eine Verbindungsleiste in mindestens ein Rohr eingeschoben ist, wobei zumindest in vertikale Richtung bereichsweise Spiel zwischen dem Rohr und der Verbindungsleiste vorgesehen ist. Die Verbindungsleiste ist dabei über mindestens ein Klemmelement innerhalb des Rohres fixiert, und über ein Justierelement ist die Neigung der Längsachse des Rohres und der Längsachse der Verbindungsleiste verstellbar. Dadurch kann eine Ausrichtung des Rohres relativ zu der Verbindungsleiste über das Justierelement erfolgen, um die über den Verbindungsbeschlag miteinander verbundenen Möbelteile zu justieren oder zu verstellen. Gerade bei frei hängenden Möbelteilen, die im Bereich des Verbindungsbeschlages nicht abgestützt sind, kann dadurch ein Durchhängen vermieden werden. Der Verbindungsbeschlag nutzt dabei die Anordnung der Verbindungsleiste in dem Rohr mit vertikalem Spiel, da in diesem Bereich eine Justierung erfolgen kann, d. h. die Verbindungsleiste wird über das Justierelement relativ zu dem Rohr in vertikale Richtung bewegt, um eine Neigungsverstellung vorzunehmen. Dadurch können auch große Möbel, wie Sofas oder Betten, in Einzelteile zerlegt werden, um transportiert und an einer anderen Stelle wieder aufgebaut zu werden.

Vorzugsweise ist in dem Rohr ein hülsenförmiger oder leistenförmiger Rohrstopfen zwischen einer Innenwand des Rohres und der Verbindungsleiste angeordnet. Der Rohrstopfen kann zur Positionierung der Verbindungsleiste innerhalb des Rohres eingesetzt werden, so dass im Bereich des Rohrstopfens eine im Wesentlichen formschlüssige Anordnung der Verbindungsleiste vorhanden ist, während in Bereichen benachbart zu dem Rohrstopfen die Verbindungsleiste mit Spiel, zumindest in vertikale Richtung, angeordnet ist. Dabei kann das Klemmelement im Bereich des Rohrstopfens angeordnet sein, um die Verbindungsleiste an dem Rohrstopfen und dem Rohr festzulegen, insbesondere auch gegen ein Verschieben in Längsrichtung zu sichern. Das Justierelement hingegen kann beanstandet von dem Rohrstopfen an dem Rohr angeordnet sein, um eine Neigungsverstellung vorzunehmen. Der Rohrstopfen kann dabei aus einem anderen Material bestehen als das Rohr und/oder die Verbindungsleiste, was geräuschmindernd wirkt, insbesondere wenn die Verbindungsleiste und das Rohr aus Metall hergestellt sind und der Rohrstopfen aus Kunststoff. Auch andere Materialien können natürlich eingesetzt werden.

In einer weiteren Ausgestaltung ist das Klemmelement als Schraube ausgebildet, die in eine am Rohr festgelegte Mutter eingreift. Auch das Justierelement kann als Schraube ausgebildet sein, die in eine am Rohr festgelegte Mutter eingreift. Die jeweiligen Muttern für das Klemmelement und/oder das Justierelement können dabei an einer Unterseite des Rohres angeordnet sein, so dass an der Oberseite des Verbindungsbeschlages ein Möbelteil mit einer Sitz- oder Liegefläche angeordnet werden kann. Es ist natürlich auch möglich, die Schraube für das Klemmelement und/oder das Justierelement an einer anderen Position vorzusehen, beispielsweise an einer Oberseite. Das Klemmelement kann ohnehin auch seitlich an dem Rohr positioniert werden. Statt des Einsatzes von Schrauben sind auch andere Klemmelemente für das Klemmen oder Justieren einsetzbar, beispielsweise Keile, Schubelemente oder Kulissenführungen.

Der Verbindungsbeschlag umfasst vorzugsweise ein erstes Rohr und ein zweites Rohr, die über die Verbindungsleiste miteinander verbunden sind. Dabei sind an jedem Rohr mindestens ein Klemmelement und ein Justierelement vorgesehen. Das erste Rohr kann dabei an einem ersten Möbelteil und das zweite Rohr an einem zweiten Möbelteil festgelegt sein, beispielsweise durch Schweißen oder mechanische Befestigungsmittel. Dadurch kann das Möbelteil mit dem Rohr eine Einheit ausbilden, die nach der Demontage des Verbindungsbeschlages transportiert wird. Die Rohre werden dabei an einer Trennungsebene der beiden Möbelteile vorgesehen und liegen dann nach dem Zusammenfügen des Verbindungsbeschlages vorzugsweise in einem geschützt angeordneten Bereich, beispielsweise an einer Unterseite einer Sitzfläche.

Für die Aufnahme hoher Lasten kann das Rohr im Querschnitt im Wesentlichen rechteckförmig ausgebildet sein, wobei die Längsseiten des Rechteckes vertikal ausgerichtet sind. Auch andere Rohrgeometrien können natürlich eingesetzt werden.

Die Erfindung wird nachfolgend anhand eines Ausführungsbeispiels mit Bezug auf die beigefügten Zeichnungen näher erläutert. Es zeigen:

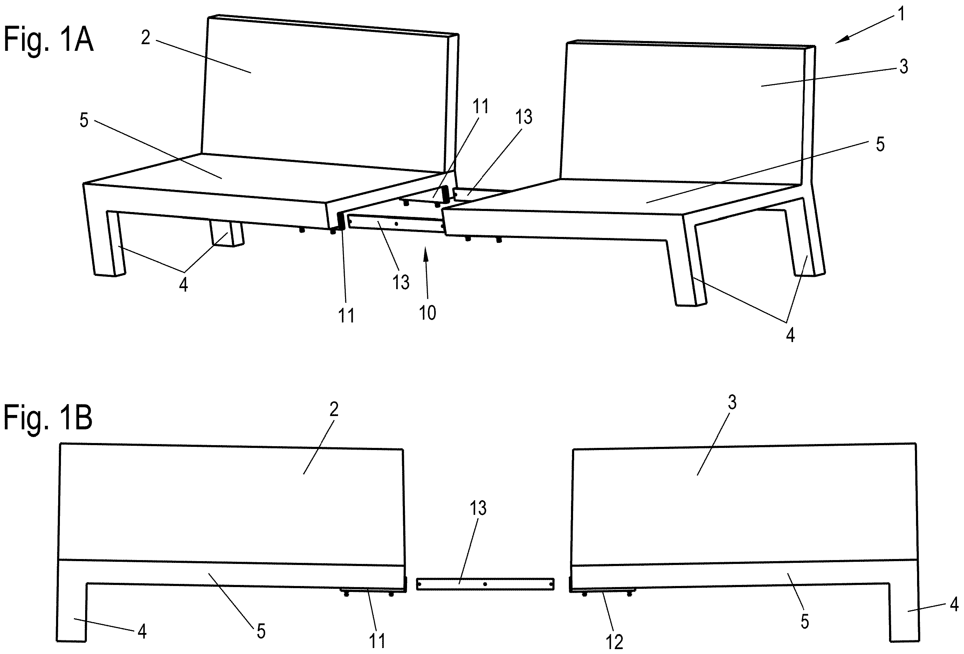

- Figuren 1A und 1B: zwei Ansichten eines Möbels bei der Montage eines erfindungsgemäßen Verbindungsbeschlages;
- Figuren 2A und 2B: zwei Ansichten des Möbels der Figur 1 bei der Montage;
- Figuren 3A und 3B: zwei Ansichten des Möbels der Figur 1 nach der Montage des Verbindungsbeschlages;
- Figuren 4A und 4B: zwei Ansichten des Möbels der Figur 1 nach der Justierung;
- Figuren 5A und 5B: zwei Schnittansichten durch den Verbindungsbeschlag der Figur 1 in unterschiedlichen Positionen, und
- Figur 6: eine Explosionsdarstellung des Verbindungsbeschlages der Figur 1.

Ein Möbel 1 umfasst ein erstes Möbelteil 2 und ein zweites Möbelteil 3, die über einen Verbindungsbeschlag 10 miteinander verbunden werden und bei Bedarf zerstörungsfrei voneinander getrennt werden können, beispielsweise im Rahmen eines Umzuges. Das Möbel 1 ist als Sofa ausgebildet, und jedes Möbelteil 2 und 3 umfasst zwei Füße 4, die an einer äußeren Stirnseite angeordnet sind, während in einem mittleren Verbindungsbereich der Verbindungsbeschlag 10 vorgesehen ist. Über den Verbindungsbeschlag 10 können Sitzflächen 5 der Möbelteile 2 und 3 miteinander verbunden werden. Unterhalb der Sitzfläche 5 ist dabei der Verbindungsbeschlag 10 montiert, wobei in dem dargestellten Ausführungsbeispiel zwei Verbindungsbeschläge 10 beabstandet voneinander vorgesehen sind.

Der Verbindungsbeschlag 10 umfasst jeweils ein erstes Rohr 11, das an dem ersten Möbelteil 2 unterhalb der Sitzfläche 5 festgelegt ist, und ein zweites Rohr 12, das unterhalb der Sitzfläche 5 des zweiten Möbelteils 3 fixiert ist. Je nach Gewichtslasten kann auch nur ein einzelner Verbindungsbeschlag 10 oder mehr als zwei Verbindungsbeschläge 10 zwischen den Möbelteilen 2 und 3 vorgesehen werden.

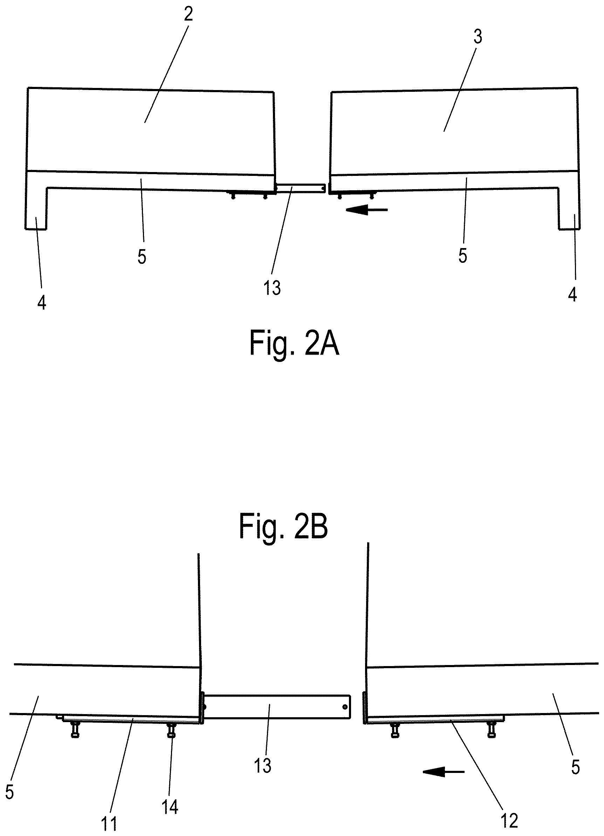

Für die Montage des Verbindungsbeschlages 10 ist jeweils eine Verbindungsleiste 13 vorgesehen, die in das erste Rohr 11 an dem Möbelteil 2 eingesteckt wird, wie dies in den Figuren 2A und 2B gezeigt ist. Die Verbindungsleiste 13 hat zumindest bereichsweise vertikales Spiel innerhalb des Rohres 11 und kann leichtgängig eingesteckt werden.

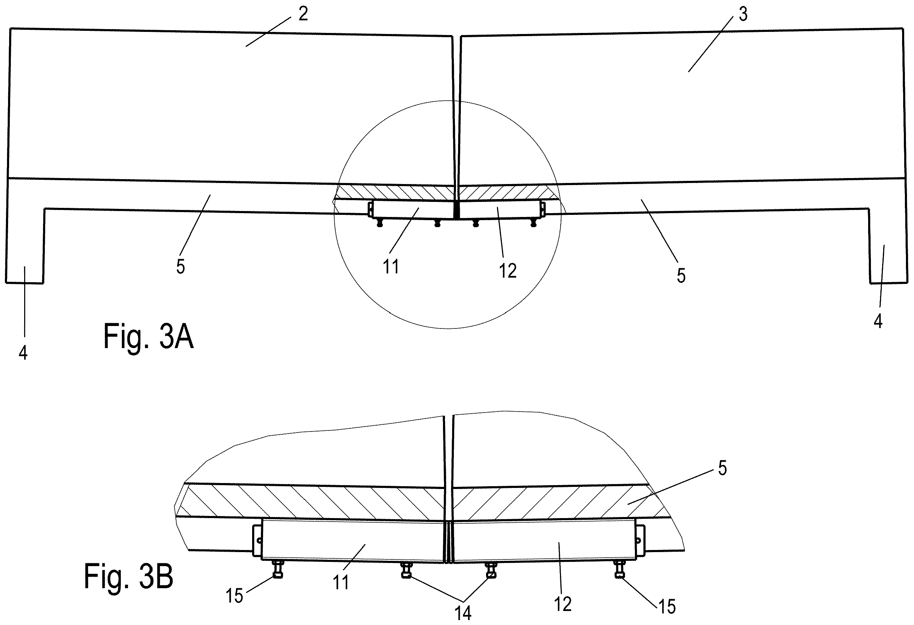

In einem weiteren Schritt wird dann die Verbindungsleiste 13 in das Rohr 12 eingesteckt, wobei hierfür das zweite Möbelteil 3 relativ zu dem ersten Möbelteil 2 verschoben wird. Dadurch wird die in den Figuren 3A und 3B gezeigte Situation erreicht. Die Verbindungsleiste 13 ist nun in den Rohren 11 und 12 aufgenommen.

Nach der Montage der Verbindungsleiste 13 ist das Sofa im Bereich der Sitzflächen 5 leicht durchhängend ausgebildet, und die Sitzflächen sind nicht exakt horizontal ausgerichtet. Insofern muss über den Verbindungsbeschlag 10 noch eine Justierung vorgenommen werden.

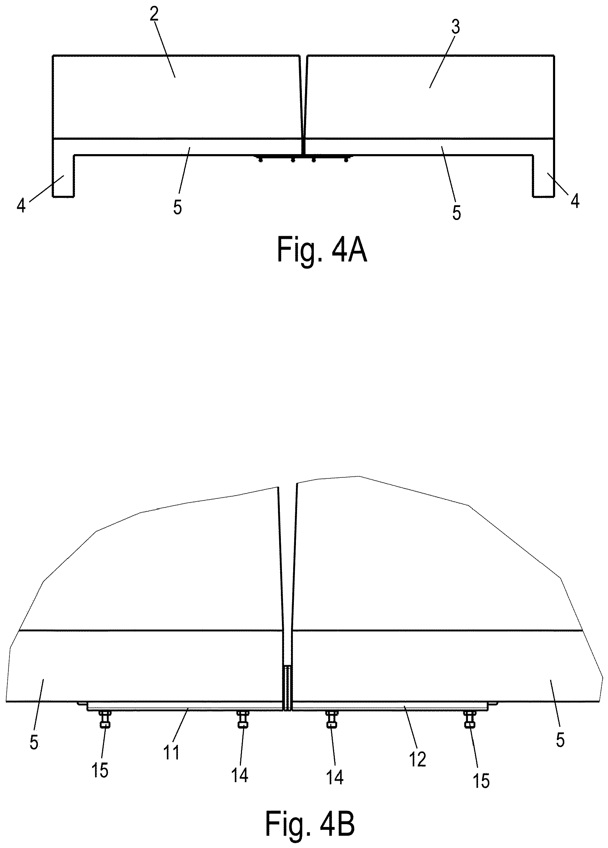

Der Verbindungsbeschlag 10 weist an der Unterseite der Rohre 11 und 12 zunächst jeweils ein Justierelement 15 auf, das zur Ausrichtung der Neigung der Verbindungsleiste 13 relativ zu den Rohren 11 und 12 dient und somit auch die Position der Sitzflächen 5 einstellen kann. Während die Sitzflächen 5 in Figur 3 noch nicht exakt flächenbündig sind, wurde durch Justage mittels der Justierelemente 15 die Sitzfläche 5 in Figur 4 exakt ausgerichtet.

Ferner ist an dem Verbindungsbeschlag 10 an der Unterseite der Rohre 11 und 12 jeweils ein Klemmelement 14 in Form von Schrauben vorgesehen, die zur klemmenden Fixierung der Verbindungsleiste 13 innerhalb des Rohres 11 oder 12 dienen. Dadurch wird ein Verschieben der Verbindungsleiste 13 relativ zu den Rohren 11 und 12 verhindert. Das Festklemmen durch die Klemmelemente 14 erfolgt dabei vorzugsweise nach der horizontalen Ausrichtung der Sitzflächen 5. Es ist aber auch möglich, vor der Ausrichtung die Klemmelemente 14 zu verspannen, um dann anschließend noch eine gewisse Ausrichtbewegung vorzunehmen, dann allerdings gegen die vorhandene Klemmkraft.

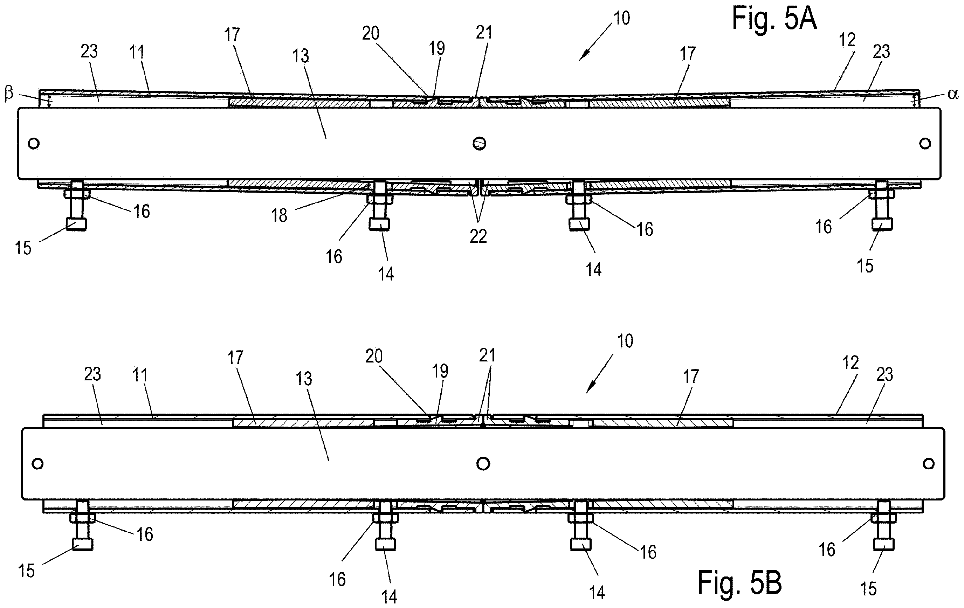

In Figur 5A ist ein Schnitt durch den erfindungsgemäßen Verbindungsbeschlag 10 gezeigt. Die Verbindungsleiste 13 ist in das erste Rohr 11 und das zweite Rohr 12 eingesteckt, die im Querschnitt rechteckförmig ausgebildet sind, wobei die Längsseite in vertikale Richtung ausgerichtet ist, wobei auch andere Rohrgeometrien für die Rohre 11 und 12 einsetzbar sind. In das Rohr 11 ist ein Rohrstopfen 17 eingefügt, der die Verbindungsleiste 13 in einem Bereich benachbart zu dem zweiten Rohr 12 umgibt, wobei der Rohrstopfen 17 kürzer ausgebildet ist als das erste Rohr 11. Auf ähnliche Weise ist in das zweite Rohr 12 ein Rohrstopfen 17 eingefügt, der auf der Seite angeordnet ist, die dem ersten Rohr 11 zugewandt ist, während in einem Bereich zur Außenseite hin kein Rohrstopfen 17 vorgesehen ist, sondern oberhalb der Verbindungsleiste 13 ein Spalt 23 zwischen dem Rohr 12 und der Verbindungsleiste 13 vorgesehen ist. Auf ähnliche Weise ist auf der gegenüberliegenden Seite zwischen der Verbindungsleiste 13 und dem Rohr 11 oberhalb der Verbindungsleiste 13 ein Spalt 23 ausgebildet. Die Rohre 11 und 12 verlaufen mit ihren Längsrichtungen nicht parallel zueinander, sondern sind winklig ausgerichtet. Insofern würden bei einem Möbel 1 die Sitzflächen 5 zueinander winklig verlaufen und ebenfalls nicht eben sein.

Um einen Verstellvorgang ausführen zu können, sind an der Unterseite der Rohre 11 und 12 jeweils Muttern 16 fixiert, beispielsweise durch Schweißen, an denen wahlweise ein Klemmelement 14 oder ein Justierelement 15 in Form von Schrauben eingedreht sind. Die Klemmelemente 14 sind dabei im Bereich der Rohrstopfen 17 angeordnet und durch eine Öffnung 18 in dem Rohrstopfen 17 durchgeführt, damit eine Stirnseite der Klemmelemente 14 gegen die Verbindungsleiste 13 drücken kann. Werden die Klemmelemente 14 angezogen, wird die Verbindungsleiste 13 klemmend gegen den Rohrstopfen 17 und die Oberseite der Rohre 11 bzw. 12 gedrückt. Dadurch wird durch die Klemmelemente 14 erreicht, dass kein Verschieben der Verbindungsleiste 13 relativ zu dem Rohren 11 und 12 erfolgen kann und die Möbelteile 2 und 3 nicht auseinandergezogen werden.

Für eine Neigungsverstellung dienen die Justierelemente 15, die ebenfalls als Schrauben ausgebildet sind und in die Muttern 16 eindrehbar sind. In Figur 5A ist an dem ersten Rohr 11 ein Winkel β zwischen einer Längsachse des Rohres 11 und einer Längsachse der Verbindungsleiste 13 ausgebildet, und an dem zweiten Rohr 12 ist ein Winkel α zwischen der Längsachse des Rohres 12 und der Längsachse der Verbindungsleiste 13 vorgesehen. Soll nun eine Ausrichtung der Rohre 11 und 12 erfolgen, werden die Justierelemente 15 eingedreht, bis die in Figur 5B gezeigte Position erreicht ist. Durch das Eindrehen der Justierelemente 15 wird die Verbindungsleiste 13 angehoben, so dass der Spalt 23 zwischen der Oberseite der Verbindungsleiste 13 und einer oberen Wand des Rohres 11 verkleinert wird. Auch an dem Rohr 12 wird der Spalt 23 zwischen dem Rohr 12 und der Verbindungsleiste 13 im oberen Bereich verkleinert, so dass nun die Längsachse der Verbindungselemente 13 im Wesentlichen parallel zu der Längsachse der Rohre 11 und 12 ausgerichtet ist. In der montierten Position würde dies für das Möbel 1 bedeuten, dass die Sitzflächen 5 durch den Verbindungsbeschlag 10 flächenbündig und nicht mehr winklig zueinander verlaufen.

Der Rohrstopfen 17 besteht vorzugsweise aus Kunststoff und kann somit geräuschdämmend wirken. Jeder Rohrstopfen 17 weist einen Rand 21 auf, der die Einstecktiefe in die Rohre 11 und 12 vorgibt. Der Rand 21 liegt dabei an einer Stirnseite der Rohre 11 und 12 an. Ferner sind an jedem Rohrstopfen 17 Rastmittel 19 vorgesehen, die durch Vorsprünge gebildet sind, die in Öffnungen 20 an dem Rohr 11 bzw. 12 eingreifen. Dadurch kann der Rohrstopfen 17 auf einfache Weise an dem Rohr 11 oder 12 montiert werden. Im Bereich der Stirnseite der Rohre 11 und 12 ist zwischen einer Unterseite der Verbindungsleiste 13 und einer Innenwand der Rohrstopfen 17 ein Spalt 22 ausgebildet.

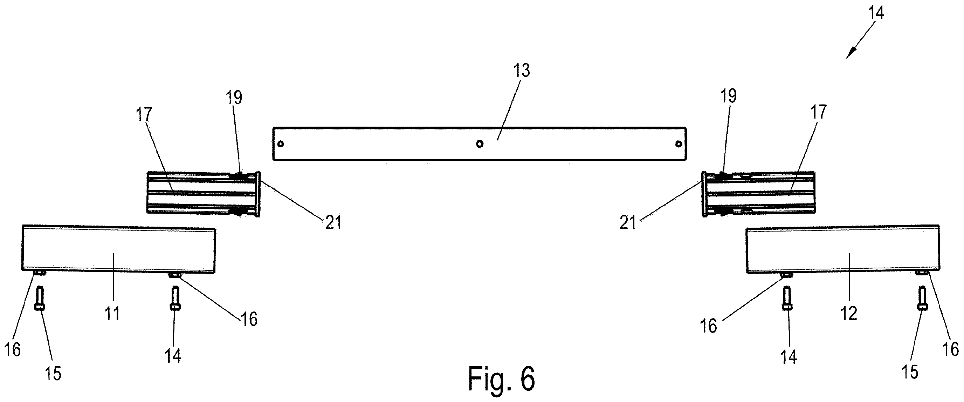

In Figur 6 ist der Verbindungsbeschlag 10 im Detail dargestellt. Der Verbindungsbeschlag 10 umfasst eine Verbindungsleiste 13, die beispielsweise aus Metall oder Kunststoff hergestellt ist, und in die Rohre 11 und 12 bzw. die Rohrstopfen 17 eingesteckt werden kann. Die Rohrstopfen 17 werden jeweils in die Rohre 11 und 12 eingesteckt, so dass kein direkter Kontakt zwischen dem Rohr 11 und 12 und der Verbindungsleiste 13 vorhanden ist. An jedem Rohr 11 oder 12 sind Muttern 16 fixiert, beispielsweise durch Verschweißen, wobei die Muttern 16 an der Unterseite der Rohre 11 und 12 vorgesehen sind. In die Muttern 16 ist dann jeweils ein Klemmelement 14 oder ein Justierelement 15 in Form von Schrauben eingedreht.

Die Rohre 11 und 12 können als Hohlprofile aus Metall hergestellt sein, während die Stopfen 17 vorzugsweise aus Kunststoff bestehen.

Des Weiteren können die Rohre 11 und 12 jeweils aus mehreren Teilen gebildet sein, z.B. in Form eines U-Profils mit Deckel oder Verbindungslaschen
In dem dargestellten Ausführungsbespiel weist der Verbindungsbeschlag 10 zwei Rohre 11 und 12 auf. Es ist auch möglich, eine Justierung vorzunehmen, wenn der Verbindungsbeschlag nur ein Rohr 11 aufweist und eine Verbindungsleiste 13, die an jeweils anderen Möbelteilen 2 oder 3 festgelegt sind. Der Einsatz von zwei Rohren 11 und 12 ermöglicht allerdings eine bessere Verstellbarkeit.

Ferner ist es möglich, die Klemmelemente 14 nicht an der Unterseite der Rohre 11 und 12 vorzusehen, sondern seitlich oder an einer Oberseite.

Die Rohre 11 und 12 sind dünnwandig und mit gleichmäßigem Querschnitt ausgebildet. Es ist auch möglich, eine Stufe in dem Rohr 11 oder 12 vorzusehen und dann auf einen zusätzlichen Rohrstopfen 17 zu verzichten.

Um den Montagevorgang zu vereinfachen, kann an der Verbindungsleiste 13 und dem Rohrstopfen 17 oder dem Rohr 11 oder 12 ein Anschlag oder eine Rastverbindung wirken, welche bewirkt, dass die Verbindungsleiste bis zu einem vordefinierten Maß axial in das Rohr 11 oder 12 eingeschoben wird.

Wird nach dem Einschieben der Verbindungsleiste 13 in das erste Möbelteil 2 das zweite Möbelteil 3 auf die Verbindungsleiste 13 aufgeschoben, bleibt somit die Verbindungsleiste 13 im ersten Möbelteil 2 axial vorfixiert. Damit ist eine Vorpositionierung ermöglicht, und anschließend kann die Verbindungsleiste 13 in jedem Rohr 11 und 12 justiert und geklemmt werden.

Ferner können die Justierelemente ebenfalls an einer anderen Position angeordnet werden, beispielsweise an einer Oberseite. Die Anordnung an einer Unterseite hat den Vorteil, dass bei aufgestelltem Möbel diese nicht sichtbar sind.

Der Verbindungsbeschlag 10 wurde an einem Möbel 1 in Form eines Sofas erläutert, allerdings kann der Verbindungsbeschlag 10 auch an anderen Polstermöbeln oder an Betten montiert werden. Erfindungsgemäß wird der Verbindungsbeschlag 10 auch bei einem Bettrahmen eingesetzt, wobei einzelne Bettrahmenteile über den Verbindungsbeschlag 10 miteinander verbunden werden.

In einer weiteren vorteilhaften Ausführungsform sind die Rohre 10 und 11 keine separaten Bauteile, die zusätzlich an das Gestell der Möbelteile 2 und 3 angebracht werden, sondern sind Bestandteil des Gestells, beispielsweise als Bestandteil einer geschweißten Rahmenkonstruktion.

### Bezugszeichenliste

- 1: Möbel
- 2: Möbelteil
- 3: Möbelteil
- 4: Fuß
- 5: Sitzfläche
- 10: Verbindungsbeschlag
- 11: Rohr
- 12: Rohr
- 13: Verbindungsleiste
- 14: Klemmelement
- 15: Justierelement
- 16: Mutter
- 17: Rohrstopfen
- 18: Öffnung
- 19: Rastmittel
- 20: Öffnung
- 21: Rand
- 22: Spalt
- 23: Spalt

## Patentansprüche

1. Bett mit einem Rahmen mit mindestens zwei Rahmenteilen, die über einen Verbindungsbeschlag (10) aneinander gehalten sind, wobei der Verbindungsbeschlag (10) mindestens ein Rohr (11, 12) umfasst, in das eine Verbindungsleiste (13) eingeschoben ist, die zumindest in vertikale Richtung bereichsweise mit Spiel in dem mindestens einen Rohr (11, 12) angeordnet ist, wobei die Verbindungsleiste (13) über mindestens ein Klemmelement (14) innerhalb des Rohres (11, 12) fixiert ist und über mindestens ein Justierelement (15) die Neigung der Längsachse des Rohres (11, 12) und der Längsachse der Verbindungsleiste (13) verstellbar ist.

2. Polstermöbel, insbesondere Sofa oder Sessel, das mindestens zwei Möbelteile (2, 3) aufweist, die über einen Verbindungsbeschlag (10) aneinander gehalten sind, wobei der Verbindungsbeschlag (10) mindestens ein Rohr (11, 12) umfasst, in das eine Verbindungsleiste (13) eingeschoben ist, die zumindest in vertikale Richtung bereichsweise mit Spiel in dem mindestens einen Rohr (11, 12) angeordnet ist, wobei die Verbindungsleiste (13) über mindestens ein Klemmelement (14) innerhalb des Rohres (11, 12) fixiert ist und über mindestens ein Justierelement (15) die Neigung der Längsachse des Rohres (11, 12) und der Längsachse der Verbindungsleiste (13) verstellbar ist.

3. Bett oder Polstermöbel nach Anspruch 1 oder 2, **dadurch gekennzeichnet, dass** in dem mindestens einen Rohr (11, 12) ein hülsenförmiger oder leistenförmiger Rohrstopfen (17) zwischen einer Innenwand des Rohres (11, 12) und der Verbindungsleiste (13) angeordnet ist.

4. Bett oder Polstermöbel nach Anspruch 3, **dadurch gekennzeichnet, dass** das Klemmelement (14) oder Justierelement (15) im Bereich des Rohrstopfens (17) angeordnet ist.

5. Bett oder Polstermöbel nach Anspruch 3 oder 4, **dadurch gekennzeichnet, dass** das Justierelement (15) oder Klemmelement (14) beabstandet von dem Rohrstopfen (17) an dem Rohr (11, 12) angeordnet ist.

6. Bett oder Polstermöbel nach einem der Ansprüche 3 bis 5, **dadurch gekennzeichnet, dass** der Rohrstopfen (17) aus einem anderen Material besteht als das Rohr (11, 12) und/oder die Verbindungsleiste (13).

7. Bett oder Polstermöbel nach einem der vorhergehenden Ansprüche, **dadurch gekennzeichnet, dass** das Klemmelement (14) als Schraube ausgebildet ist, die in eine am Rohr (11, 12) festgelegte Mutter (16) eingreift.

8. Bett oder Polstermöbel nach einem der vorhergehenden Ansprüche, **dadurch gekennzeichnet, dass** das Justierelement (15) als Schraube ausgebildet ist, die in eine am Rohr (11, 12) festgelegte Mutter (16) eingreift.

9. Bett oder Polstermöbel nach Anspruch 7 oder 8, **dadurch gekennzeichnet, dass** die Mutter (16) für das Klemmelement (14) und/oder das Justierelement (15) an einer Unterseite des Rohres (11, 12) angeordnet ist.

10. Bett oder Polstermöbel nach einem der vorhergehenden Ansprüche, **dadurch gekennzeichnet, dass** der Verbindungsbeschlag (10) ein erstes Rohr (11) und ein zweites Rohr (12) aufweist, die über eine Verbindungsleiste (13) miteinander verbunden sind.

11. Bett oder Polstermöbel nach Anspruch 10, **dadurch gekennzeichnet, dass** an jedem Rohr (11, 12) mindestens ein Justierelement (15) vorgesehen ist, und zumindest an einem Rohr (11, 12), insbesondere an beiden Rohren (11, 12), ein Klemmelement (14) vorgesehen ist.

12. Bett oder Polstermöbel nach einem der vorhergehenden Ansprüche, **dadurch gekennzeichnet, dass** das erste Rohr (11) an einem ersten Möbelteil (2) und das zweite Rohr (12) an einem zweiten Möbelteil (3) festgelegt ist.

13. Bett oder Polstermöbel nach einem der vorhergehenden Ansprüche, **dadurch gekennzeichnet, dass** das mindestens eine Rohr (11, 12) im Querschnitt im Wesentlichen rechteckförmig ausgebildet ist.

14. Bett oder Polstermöbel nach einem der vorhergehenden Ansprüche, **dadurch gekennzeichnet, dass** das mindestens eine Rohr (11, 12) integral mit einem Gestell für ein Möbel ausgebildet ist.

## Claims

1. A bed having a frame comprising at least two frame parts, which are held on one another via a connection fitting (10), said connection fitting (10) comprising at least one tube (11, 12), into which a connection strip (13) is inserted, which is arranged with clearance in some regions at least in the vertical direction in the at least one tube (11, 12), wherein the connection strip (13) is fixed via at least one clamping element (14) inside the tube (11, 12) and the inclination of the longitudinal axis of the tube (11, 12) and the longitudinal axis of the connection strip (13) is adjustable via at least one adjustment element (15).

2. An item of upholstered furniture, in particular a sofa or armchair, which has at least two furniture parts (2, 3), which are held on one another via a connection fitting (10), said connection fitting (10) comprising at least one tube (11, 12), into which a connection strip (13) is inserted, which is arranged with clearance in some regions at least in the vertical direction in the at least one tube (11, 12), wherein the connection strip (13) is fixed via at least one clamping element (14) inside the tube (11, 12) and the inclination of the longitudinal axis of the tube (11, 12) and the longitudinal axis of the connection strip (13) is adjustable via at least one adjustment element (15).

3. Bed or item of upholstered furniture according to Claim 1 or 2, **characterized in that** a sleeve-shaped or strip-shaped tube plug (17) is arranged between an inner wall of the tube (11, 12) and the connection strip (13) in the at least one tube (11, 12).

4. Bed or item of upholstered furniture according to Claim 3, **characterized in that** the clamping element (14) or adjustment element (15) is arranged in the region of the tube plug (17).

5. Bed or item of upholstered furniture according to Claim 3 or 4, **characterized in that** the adjustment element (15) or clamping element (14) is arranged spaced apart from the tube plug (17) on the tube (11, 12).

6. Bed or item of upholstered furniture according to any one of Claims 3 to 5, **characterized in that** the tube plug (17) consists of a different material than the tube (11, 12) and/or the connection strip (13).

7. Bed or item of upholstered furniture according to any one of the preceding claims, **characterized in that** the clamping element (14) is designed as a screw, which engages in a nut (16) fixed on the tube (11, 12).

8. Bed or item of upholstered furniture according to any one of the preceding claims, **characterized in that** the adjustment element (15) is designed as a screw, which engages in a nut (16) fixed on the tube (11, 12).

9. Bed or item of upholstered furniture according to Claim 7 or 8, **characterized in that** the nut (16) for the clamping element (14) and/or the adjustment element (15) is arranged on a lower side of the tube (11, 12).

10. Bed or item of upholstered furniture according to any one of the preceding claims, **characterized in that** the connection fitting (10) has a first tube (11) and a second tube (12), which are connected to one another via a connection strip (13).

11. Bed or item of upholstered furniture according to Claim 10, **characterized in that** at least one adjustment element (15) is provided on each tube (11, 12), and a clamping element (14) is provided at least on one tube (11, 12), in particular on both tubes (11, 12).

12. Bed or item of upholstered furniture according to any one of the preceding claims, **characterized in that** the first tube (11) is fixed on a first furniture part (2) and the second tube (12) is fixed on a second furniture part (3).

13. Bed or item of upholstered furniture according to any one of the preceding claims, **characterized in that** the at least one tube (11, 12) is formed essentially rectangular in cross section.

14. Bed or item of upholstered furniture according to any one of the preceding claims, **characterized in that** the at least one tube (11, 12) is integrally formed with a frame for an item of furniture.

## Revendications

1. Lit avec un cadre comprenant au moins deux parties de cadre retenues l'une contre l'autre par une ferrure d'assemblage (10), laquelle ferrure d'assemblage (10) comprend au moins un tube (11, 12) dans lequel est insérée une barre d'assemblage (13) qui est disposée avec un jeu au moins dans le sens vertical par zones dans l'au moins un tube (11, 12), la barre d'assemblage (13) étant fixée par au moins un élément de serrage (14) à l'intérieur du tube (11, 12) et l'inclinaison de l'axe longitudinal du tube (11, 12) et de l'axe longitudinal de la barre d'assemblage (13) pouvant être ajustée à l'aide d'au moins un élément d'ajustement (15).

2. Meuble rembourré, en particulier canapé ou fauteuil, comprenant au moins deux parties de meuble (2, 3) retenues l'une contre l'autre par une ferrure d'assemblage (10), laquelle ferrure d'assemblage (10) comprend au moins un tube (11, 12) dans lequel est insérée une barre d'assemblage (13) qui est disposée avec un jeu au moins dans le sens vertical par zones dans l'au moins un tube (11, 12), la barre d'assemblage (13) étant fixée par au moins un élément de serrage (14) à l'intérieur du tube (11, 12) et l'inclinaison de l'axe longitudinal du tube (11, 12) et de l'axe longitudinal de la barre d'assemblage (13) pouvant être ajustée à l'aide d'au moins un élément d'ajustement (15).

3. Lit ou meuble rembourré selon la revendication 1 ou 2, **caractérisé en ce qu'**un bouchon de tube (17) en forme de douille ou de barre est disposé dans l'au moins un tube (11, 12) entre une paroi intérieure du tube (11, 12) et la barre d'assemblage (13).

4. Lit ou meuble rembourré selon la revendication 3, **caractérisé en ce que** l'élément de serrage (14) ou l'élément d'ajustement (15) est disposé au niveau du bouchon de tube (17).

5. Lit ou meuble rembourré selon la revendication 3 ou 4, **caractérisé en ce que** l'élément d'ajustement (15) ou l'élément de serrage (14) est disposé sur le tube (11, 12) à distance du bouchon de tube (17).

6. Lit ou meuble rembourré selon la revendication 3 à 5, **caractérisé en ce que** le bouchon de tube (17) est fait d'un autre matériau que le tube (11, 12) et/ou la barre d'assemblage (13).

7. Lit ou meuble rembourré selon l'une des revendications précédentes, **caractérisé en ce que** l'élément de serrage (14) est conformé comme une vis qui se met en prise dans un écrou (16) fixé au tube (11, 12).

8. Lit ou meuble rembourré selon l'une des revendications précédentes, **caractérisé en ce que** l'élément d'ajustement (15) est conformé comme une vis qui se met en prise dans un écrou (16) fixé au tube (11, 12).

9. Lit ou meuble rembourré selon la revendication 7 ou 8, **caractérisé en ce que** l'écrou (16) pour l'élément de serrage (14) et/ou l'élément d'ajustement (15) est disposé sur une face inférieure du tube (11, 12).

10. Lit ou meuble rembourré selon l'une des revendications précédentes, **caractérisé en ce que** la ferrure d'assemblage (10) comprend un premier tube (11) et un deuxième tube (12) qui sont reliés l'un à l'autre par une barre d'assemblage (13).

11. Lit ou meuble rembourré selon la revendication 10, **caractérisé en ce qu'**au moins un élément d'ajustement (15) est prévu sur chaque tube (11, 12) et un élément de serrage (14) est prévu sur au moins un tube (11, 12), en particulier sur les deux tubes (11, 12).

12. Lit ou meuble rembourré selon l'une des revendications précédentes, **caractérisé en ce que** le premier tube (11) est fixé sur une première partie de meuble (2) et le deuxième tube (12) sur une deuxième partie de meuble (3).

13. Lit ou meuble rembourré selon l'une des revendications précédentes, **caractérisé en ce qu'**au moins un tube (11, 12) a une section de forme sensiblement rectangulaire.

14. Lit ou meuble rembourré selon l'une des revendications précédentes, **caractérisé en ce que** l'au moins un tube (11, 12) est formé d'un seul tenant avec un châssis pour un meuble.
